# EUROPÄISCHE PATENTANMELDUNG

(11) **EP 3 772 519 A1**
(43) Veröffentlichungstag der Anmeldung: **10.02.2021**
(21) Anmeldenummer: 19190579.3
(22) Anmeldetag: 07.08.2019
(51) Int. Cl.: C08G 18/10, C08G 18/32, C08G 18/42, C08G 18/44, C08G 18/48, C08G 18/65, C08G 18/66, C08G 18/73, C08G 18/76, C08G 18/50

(54) **VERFAHREN ZUR HERSTELLUNG VON THERMOPLASTISCH VERARBEITBAREN POLYURETHANPOLYMEREN**

(71) Anmelder: Covestro Deutschland AG, 51373 Leverkusen (DE)
(72) Erfinder: Shen, Yi, 41539 Dormagen (DE); Hermanns, Franz-Heinrich, 41516 Grevenbroich (DE); Wamprecht, Christian, 41472 Neuss (DE); Reichert, Peter, 41541 Dormagen (DE)
(74) Vertreter: Levpat

(57) **Zusammenfassung**

Die vorliegende Erfindung betrifft ein neues Verfahren zur Herstellung von thermoplastisch verarbeitbaren Polyurethanen, thermoplastisch verarbeitbare Polyurethan erhältlich aus dem Verfahren, Zusammensetzungen, Artikel und Verwendungen dieser Polyurethane.

## Beschreibung

Die vorliegende Erfindung betrifft ein neues Verfahren zur Herstellung von thermoplastisch verarbeitbaren Polyurethanen, thermoplastisch verarbeitbare Polyurethan erhältlich aus dem Verfahren, Zusammensetzungen, Artikel und Verwendungen dieser Polyurethane.

Thermoplastisch verarbeitbare Polyurethanpolymere (TPU) sind seit langem bekannt. Sie sind von großer technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben. TPU's werden aus linearen Polyolen, meist Polyether oder Polyester, organischen Diisocyanaten und kurzkettigen Diolen (Kettenverlängerer) aufgebaut. Die TPU können kontinuierlich oder diskontinuierlich hergestellt werden. Die bekanntesten technischen Herstellverfahren, die auch technisch genutzt werden, sind das Bandverfahren (GB 1057018 A) und das Extruderverfahren (DE 1964834 A-1 und DE 2059570 A-1).

Zur Einstellung der Eigenschaften können die Aufbaukomponenten in relativ breiten molaren Verhältnissen variiert werden. Bewährt haben sich molare Verhältnisse von Makrodiolen zu Kettenverlängerern von 1:1 bis 1:12. Durch die Menge an Kettenverlängerer kann in einem weiten Bereich die Härte der TPU eingestellt werden. Hierdurch ergeben sich Produkte im Härtebereich von ca. 40 Shore A bis ca. 85 Shore D.

Zur Verbesserung des Verarbeitungsverhaltens, insbesondere der Zykluszeit, sind über den gesamten Härtebereich von ca. 40 Shore A bis ca. 85 Shore D solche TPU von besonderem Interesse, die bei Spritzgussartikeln nach dem Verarbeitungsvorgang eine sehr hohe Verfestigungsgeschwindigkeit aufweisen. Besonders bei harten TPU und weichen TPU kommt es häufig zu Problemen bei der chemischen Ankopplung von Hart- und Weichsegment aufgrund zu hoher Polaritätsunterschiede dieser Phasen. Dadurch kann das gesamte Potenzial der mechanischen Eigenschaften und der Verarbeitungseigenschaften oft nicht vollständig ausgeschöpft werden. Es hat nicht an Versuchen gefehlt, durch spezielle Verfahren diese Nachteile zu beheben.

Ein Verfahren zur Herstellung von thermoplastisch verarbeitbaren Polyurethanen wird von W. Bräuer u.a. beschrieben (EP-A 1757632). Durch ein mehrstufiges OH-Prepolymer Verfahren wird die Homogenität der TPU verbessert. Die verbesserte Homogenität verlangsamt jedoch die Verfestigungsgeschwindigkeit der TPU.

Ein Verfahren zur Herstellung von weichen, gut entformbaren thermoplastischen Polyurethanelastomeren mit geringer Schwindung wird von W. Bräuer u.a. beschrieben (EP-A 1338614). Durch Weichsegment-Vorverlängerung wurde das Entformungsverhalten von TPU zwischen 45 Shore A und 65 Shore A verbessert. Bei sehr hohen Härten hat dieses Verfahren deutlich Nachteile, weil es zu Unverträglichkeiten der Hart- und Weichphase kommt und somit eine gute Ankopplung dieser Phase nicht mehr stattfinden kann. Dadurch wird das für gute mechanische Eigenschaften notwendige hohe Molekulargewicht der TPU nicht erreicht. Auch ist dieses Verfahren in der Praxis wegen zu hohen und schwankenden Viskositäten der Prepolymerstufe sehr instabil und funktioniert unter 60 Shore A nicht mehr zufriedenstellend, sodass häufig Extruderstillstände vorkommen.

Weitere weiche thermoplastische Polyurethanelastomere, ein Verfahren zu ihrer Herstellung und Verwendung wird ebenfalls von W. Bräuer u.a. beschrieben (EP-A 1932863). Durch die Kombination von verschiedenen Polyesterpolyolen und Kettenverlängerern wurden TPU mit guter Entformbarkeit erhalten. Jedoch werden dabei keine TPU auf Basis von Polyethern beschrieben. Bei weichmacherfreien TPU nach diesem Verfahren mit einer Härte kleiner als 60 Shore A hat man bisher nur eine sehr langsame Verfestigung nach der Spritzgießverarbeitung erzielt.

Um die Tieftemperaturschlagzähigkeit von beispielsweise Polyester basierten TPUs für Skischuh Anwendungen zu verbessern, werden Polyetherpolyole mit einem Molekulargewicht von größer als 1600 g/mol als Modifikator eingesetzt, wie z.B Polyetetramethylenetherglykol (US4980445A) und Polypropylendiolether (WO/2018/158327). Aufgrund der Unverträglichkeiten der Hart- und Weichphase im TPU, die zu einer schlechten Ankopplung dieser Phasen führt, können solche Polyether nur schwer als reine Weichphase in TPU, die härter als 60 Shore D sind, eingebaut werden. Ein hartes TPU mit guter Tieftemperaturschlagzähigkeit ist ohne Modifikator nur schwer herstellbar.

Aufgabe der Erfindung war es daher, ein neues Verfahren zur Herstellung von TPU bereitzustellen, das es ermöglicht thermoplastischen Polyurethane mit guten Verarbeitungseigenschaften und guten mechanischen Eigenschaften über einen sehr großen Härtebereich von ca. 40 Shore A bis ca. 85 Shore D herzustellen.

Diese Aufgabe wurde überraschend gelöst durch ein Verfahren zur Herstellung von thermoplastisch verarbeitbaren Polyurethanpolymeren durch Umsetzen der Komponenten
(A) einem oder mehreren im wesentlichen linearen Polyolen, wobei die Gesamtmenge der Komponente (A) ein mittleres Molekulargewicht im Bereich von 500 g/mol bis 5000 g/mol aufweist,
(B) einem oder mehreren organischen Polyisocyanaten, vorzugsweise organischen Diisocyanaten,
(C) einem oder mehreren linearen Diolen mit einem Molekulargewicht von 62 g/mol bis 500 g/mol,
(D) gegebenenfalls in Gegenwart von einem oder mehreren Katalysatoren,
(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern, dadurch gekennzeichnet, dass das Verfahren die folgenden Schritte umfasst oder daraus besteht:
   1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
   2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
   3) Umsetzen des OH-funktionellen Prepolymers mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt.

Das erfindungsgemäße Verfahren ermöglicht es thermoplastischen Polyurethane mit guten Verarbeitungseigenschaften und guten mechanischen Eigenschaften über einen Härtebereich von ca. 40 Shore A bis ca. 85 Shore D herzustellen. Des Weiteren gelingt es unter anderem auch, TPU mit einer Härte von kleiner als 60 Shore A, ohne die Verwendung von Weichmachern, bereitzustellen, die nach der Spritzgießverarbeitung eine schnelle Verfestigungsgeschwindigkeit aufweisen. Ebenfalls gelingt es nach diesem Verfahren auch sehr harte TPU bis zu einer Härte von 85 Shore D herzustellen und dabei eine gute Ankopplung der Hart- und Weichphasen der TPU zu erzielen, was zu einem optimal hohen Molekulargewicht führt und damit zu sehr guten mechanischen Eigenschaften der gefertigten Werkstücke.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

"Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-%, noch mehr bevorzugter mindestens 99,8 Mol-% und am Bevorzugtesten 100 Mol-% der Gesamtstoffmenge der Polyole der Komponente A) aus linearen Polyolen bestehen.

Bevorzugt bedeuten erfindungsgemäß die Ausdrücke "umfassend" oder "enthaltend", "im Wesentlichen bestehend aus" und besonders bevorzugt "bestehend aus".

Die Härte der thermoplastisch verarbeitbaren Polyurethane kann durch Wahl des molaren Verhältnisses von Komponente A) zu Komponente C) von 40 Shore A bis 85 Shore D eingestellt werden.

Die Mengen der Reaktionskomponenten für die NCO-funtionelle Prepolymerbildung in Schritt 1) werden so gewählt, dass das NCO/OH-Verhältnis von Polyisocyanat zu Polyol in Schritt 1) 1,1:1 bis 5,0:1 beträgt.

Die Komponenten werden innig gemischt und die NCO-Prepolymerreaktion in Schritt 1) wird vorzugsweise zum vollständigen Umsatz (bezogen auf die Polyolkomponente) gebracht.

Anschließend erfolgt die Einmischung von mindestens Komponente (C) als Kettenverlänger (Schritt 2) zu einem im wesentlichen OH-funktionellen Prepolymer.

"Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-%, noch mehr bevorzugter mindestens 99,8 Mol-% und am Bevorzugtesten 100 Mol-% der Gesamtstoffmenge der gebildeten Prepolymere, OH-funktionelle Prepolymere sind.

Danach wird in Schritt 3) die Restmenge der Komponente (B) hinzugegeben, wobei ein NCO/OH - Verhältnis von 0,9:1 bis 1,2:1 eingehalten wird. Bevorzugt wird in Schritt 3) die gleich Komponente (B) eingesetzt wie in Schritt 1).

In einer bevorzugten Ausführungsform des erfindungsgemäßen Verfahrens liegt im Verfahrensschritt 2) ein molares Verhältnis von NCO-funktionellen Prepolymer zu Komponente (C) von kleiner 1,0 vor. Die Komponente (C) liegt somit im molaren Überschuss vor.

Als Komponente (A) eignen sich alle im linearen Polyole die dem Fachmann bekannt sind und ein mittleres Molekulargewicht von größer 500 g/mol aufweisen. Insbesondere eignen sich die folgenden linearen Polyole als Komponente (A):
a) Polyesterpolyole,
b) Polyetherpolyole,
c) Polyetherester,
d) Polycarbonatpolyole,
e) Polyethercarbonate,
oder beliebige Gemische der Polyole a) bis e).

Geeignete Polyesterdiole a) können beispielsweise aus Dicarbonsäuren mit 2 bis 12 Kohlenstoffatomen, vorzugsweise 2 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, Dodecandisäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterpolyole kann es gegebenen¬falls vorteilhaft sein, anstelle der Dicarbonsäuren die entsprechenden Dicarbon¬säurederivate, wie Carbon¬säurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 12, vorzugsweise 2 bis 6 Kohlenstoffatomen, wie beispielsweise Ethylenglykol, Diethylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol, 1,2-Propandiol und Dipropylenglykol. Je nach den gewünschten Eigenschaften können die mehrwertigen Alkohole allein oder gegebenenfalls in Mischung untereinander verwendet werden. Geeignet sind ferner Konden¬sationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterpolyole werden vorzugsweise Ethandiol-polyadipate, 1,4-Butandiol-polyadipate, 1,6-Hexandiol-polyadipate, Ethandiol-1,4-butandiol-polyadipate, 1,6-Hexandiolneopentylglykol-polyadipate, 1,6-Hexandiol-1,4-butandiol-polyadipate und Polycaprolactone verwendet. Die Polyesterdiole weisen Molekulargewichte im Bereich von 500 bis 5000 g/mol, vorzugsweise im Bereich von 600 bis 3500 g/mol und besonders bevorzugt im Bereich von 800 bis 3000 g/mol. Sie können einzeln oder in Form von Mischungen untereinander zur Anwendung kommen.

Geeignete Polyetherdiole b) können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Geeignete Polyetherdiole besitzen ein zahlenmittleres Molekulargewichte Mₙ von 500 bis 5000 g/mol, vorzugsweise 750 bis 5000 g/mol und ganz besonders bevorzugt 900 bis 4200 g/mol. Sie können sowohl einzeln als auch in Form von Mischungen untereinander zur Anwendung kommen.

Geeignete Polyetherester c) können beispielsweise hergestellt werden durch Umsetzung von kurzkettigen Polyetherdiolen, wie z. B. Polytetrahydrofuranen mit Molekulargewichten von 250 bis 1000 g/mol mit organischen Dicarbonsäuren, wie beispielsweise Bernsteinsäure oder Adipinsäure. Die Polyetheresterdiole besitzen Molekulargewichte von 600 bis 5000 g/mol, vorzugsweise 700 bis 4000 g/mol und besonders bevorzugt 800 bis 3000 g/mol. Sie können einzeln oder in Form von Mischungen untereinander zur Anwendung kommen.

Geeignete Polycarbonatdiole d) können beispielsweise hergestellt werden durch Umsetzung von kurzkettigen Diolen, wie z. B. 1,4-Butandiol oder 1,6-Hexandiol mit Diphenylcarbonat oder Dimethylcarbonat unter Zuhilfenahme von Katalysatoren und Abspaltung von Phenol oder Methanol. Die Polycarbonatdiole besitzen ein zahlenmittleres Molekulargewicht von 500 bis 5000 g/mol, vorzugsweise 750 bis 5000 g/mol und besonders bevorzugt 1000 bis 4500 g/mol.

Geeignete Polyethercarbonatdiole e) können beispielsweise hergestellt werden durch Umsetzung von kurzkettigen Polyetherdiolen, wie z. B. Polytetrahydrofuranen mit Molekulargewichten von 250 bis 1000 g/mol mit Diphenyl- oder Dimethylcarbonat unter Zuhilfenahme von Katalysatoren und Abspaltung von Phenol oder Methanol. Weiterhin können Polyethercarbonatdiole hergestellt werden durch Copolymerisation von Alkylenoxiden, wie z. B. Ethylenoxid oder Propylenoxid oder Gemischen davon, mit Kohlendioxid unter Zuhilfenahme von geeigneten Katalysatoren, wie z. B. Doppelmetallcyanidkatalysatoren. Die Polyethercarbonatdiole besitzen ein zahlenmittleres Molekulargewicht von 500 bis 8000 g/mol, vorzugsweise 750 bis 6000 g/mol und besonders bevorzugt 1000 bis 4500 g/mol.

In einer weiteren bevorzugten Ausführungsform des erfindungsgemäßen Verfahrens werden als Komponente (A) ein oder mehrere Polyole eingesetzt, ausgewählt aus der Gruppe bestehend aus Polyesterdiolen, Polyetherdiolen, Polycarbonatdiolen oder einem Gemisch aus mindestens zwei von diesen, vorzugsweise wobei die ein oder mehreren Polyole jeweils ein mittleres Molekulargewicht im Bereich von 500 g/mol bis 5000 g/mol aufweisen.

In einer weiteren bevorzugten Ausführungsform des erfindungsgemäßen Verfahrens werden als Komponente (A) ein oder mehrere Polyesterdiole mit einem mittleren Molekulargewicht im Bereich von 500 g/mol bis 5000 g/mol, vorzugsweise im Bereich von 600 g/mol bis 3500 g/mol und besonders bevorzugt im Bereich von 800 g/mol bis 3000 g/mol, eingesetzt.

In einer weiteren bevorzugten Ausführungsform des erfindungsgemäßen Verfahrens werden als Komponente (A) ein oder mehrere Polycarbonatdiole mit einem mittleren Molekulargewicht im Bereich von im Bereich von 500 g/mol bis 5000 g/mol, vorzugsweise im Bereich von 750 g/mol bis 5000 g/mol und besonders bevorzugt im Bereich von 1000 g/mol bis 4500 g/mol, eingesetzt.

In einer weiteren bevorzugten Ausführungsform des erfindungsgemäßen Verfahrens werden als Komponente (A) ein oder mehrere Polyetherdiole mit einem mittleren Molekulargewicht im Bereich von 500 g/mol bis 5000 g/mol, vorzugsweise im Bereich von 750 g/mol bis 5000 g/mol und besonders bevorzugt im Bereich von 900 g/mol bis 4200 g/mol, eingesetzt.

In einer weiteren bevorzugten Ausführungsform des erfindungsgemäßen Verfahrens ist das eine oder sind die mehreren Polyetherdiole unabhängig voneinander Polyether auf Basis eines Polymerisats von Ethylenoxid oder Propylenoxyd oder einem Gemisch aus verschiedenen Polymerisaten dieser Rohstoffe.

In einer weiteren bevorzugten Ausführungsform des erfindungsgemäßen Verfahrens ist das eine oder sind die mehreren Polyetherdiole unabhängig voneinander Polyether auf Basis eines Polymerisats von Tetrahydrofuran.

Als organische Polyisocyanate der Komponente (B), die in den Schritten 1) und 3) eingesetzt werden, kommen beispielsweise aliphatische, cycloaliphatische, araliphatische, heterocyclische und aromatische Polyisocyanate in Betracht, wie sie in Justus Liebigs Annalen der Chemie, 562, S.75-136 beschrieben werden.

Im Einzelnen seien beispielhaft genannt: aliphatische Diisocyanate, wie 1,6-Hexamethylendiisocyanat, cycloaliphatische Diisocyanate, wie Isophorondiisocyanat, 1,4-Cyclohexan-diisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, 4,4'-Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylenpolyisocyanaten.

In einer weiteren bevorzugten Ausführungsform des erfindungsgemäßen Verfahrens wird als Komponente (B) ein Diphenylmethandiisocyanat-Isomerengemisch mit einem 4,4'-Diphenylmethandiisocyanatgehalt von größer 96 Gew.-% bezogen auf das Gesamtgewicht der Komponente (B) eingesetzt, vorzugsweise wird als Komponente (B) 4,4'-Diphenylmethandiisocyanat eingesetzt.

In einer weiteren bevorzugten Ausführungsform des erfindungsgemäßen Verfahrens wird als Komponente (B) 1,6-Hexamethylendiisocyanat eingesetzt.

Als Komponente (C) (Ketternverlängerer) eignen sich alle dem Fachmann bekannten linearen Diolen mit einem Molekulargewicht von 62 g/mol bis 500 g/mol. Die Diole und / oder deren Vorläuferverbindungen können aus fossilen oder biologischen Quellen gewonnen worden sein. Geeignete Diole sind vorzugsweise aliphatische Diole mit 2 bis 14 Kohlenstoffatomen, wie z.B. Ethandiol, 1,4-Butandiol, 1,6-Hexandiol, 1,8-Octandiol, 1,10-Decandiol, 1,12-Dodecandiol, Diethylenglykol und Dipropylenglykol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di-(hydroxyethyl)-hydrochinon und ethoxylierte Bisphenole. Besonders bevorzugt werden als kurzkettige Diole Ethandiol, 1,4-Butandiol, 1,6-Hexandiol und 1,4-Di-(hydroxyethyl)-hydrochinon eingesetzt. Es können auch Gemische der vorgenannten Kettenverlängerer eingesetzt werden. Daneben können auch kleine Mengen an Diaminen und / oder an Triolen zugesetzt werden.

In einer weiteren bevorzugten Ausführungsform des erfindungsgemäßen Verfahrens werden als Komponente (C) ein oder mehrere Diole eingesetzt, ausgewählt aus der Gruppe bestehend aus 1,2-Ethandiol, 1,4-Butandiol, 1,6-Hexandiol, 1,4-Di-(beta-Hydroxyethyl)hydrochinon oder einen Gemisch aus mindestens zwei von diesen eingesetzt, vorzugsweise werden als Komponente (C) 1,2-Ethandiol, 1,4-Butandiol oder Mischungen hieraus eingesetzt und besonders bevorzugt wird als Komponente (C) 1,2-Ethandiol eingesetzt.

Als Katalysatoren (D) können die üblichen aus der Polyurethanchemie bekannten Katalysatoren eingesetzt werden. Geeignete Katalysatoren sind an sich bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan, und ähnliche sowie insbesondere organische Metallverbindungen wie Titansäureester, Eisenverbindungen, Wismutverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt sind Dibutylzinndilaurat, Zinndioctoat und Titansäureester.

Als Additive, Hilfs- und Zusatzstoffe (E) können beispielsweise Gleitmittel, wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe, Nukleierungsmittel und Verstärkungsmittel eingesetzt werden. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzmittel sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Als monofunktionelle Kettenabbrecher (F) können Monoalkohole wie z. B. 1-Butanol, 1-Hexanol, 1-Oktanol und Stearylalkohol oder Monoamine, wie z. b. 1-Butylamin und Stearylamin eingesetzt werden, um ein bestimmtes TPU-Molekulargewicht einzustellen.

In einer weiteren bevorzugten Ausführungsform des erfindungsgemäßen Verfahrens weist das thermoplastisch verarbeitbares Polyurethanpolymer eine Härte von kleiner 60 Shore A oder größer 80 Shore D, vorzugsweise im Bereich von 35 Shore A bis 60 Shore A oder im Bereich von 70 Shore D bis 95 Shore D, besonders bevorzugt im Bereich von 40 Shore A bis 55 Shore A oder im Bereich von 75 Shore D bis 90 Shore D auf.

In einer weiteren bevorzugten Ausführungsform des erfindungsgemäßen Verfahrens weist das thermoplastisch verarbeitbares Polyurethanpolymer eine Härte von kleiner 60 Shore A, vorzugsweise im Bereich von 35 Shore A bis 60 Shore A, besonders bevorzugt im Bereich von 40 Shore A bis 55 Shore A auf.

In einer weiteren bevorzugten Ausführungsform des erfindungsgemäßen Verfahrens weist das thermoplastisch verarbeitbares Polyurethanpolymer eine Härte von größer 70 Shore D, vorzugsweise im Bereich von 70 Shore D bis 95 Shore D, besonders bevorzugt im Bereich im Bereich von 75 Shore D bis 90 Shore D auf.

Besonders bevorzugt werden die TPU nach dem erfindungsgemäßen Verfahren mit einer Härte von Shore A 40 bis Shore A 60 aus folgenden Hauptkomponenten hergestellt:
Komponente (A):
   i) 1,4-Butandiol-polyadipate, 1,6-Hexandiol-polyadipate, Ethandiol-1,4-butandiol-polyadipate, 1,6-Hexandiol-neopentylglykol-polyadipate, 1,6-Hexandiol-1,4-butandiol-polyadipate und deren Mischungen mit Molekulargewichten von 500 bis 5000 g/mol, oder
   ii) Polypropylenoxide oder Polyethylen-/Polypropylenoxide und/oder Polymerisate des Tetrahydrofurans und deren Mischungen mit Molekulargewichten von 500 bis 5000 g/mol,
Komponente (B):
   iii) 4,4'-Diphenylmethandiisocyanat, 4,4'-Dicyclohexylmethandiisocyanat und/oder 1,6-Hexamethylendiisocyanat
Komponente (C):
   iv) Ethandiol, 1,4-Butandiol, 1,6-Hexandiol und/oder 1,4-Di-(hydroxyethyl)-hydrochinon.,
   wobei auch Mischungen der Komponenten innerhalb i) bis iv) und auch zwischen i) und ii) eingesetzt werden können.

Die thermoplastisch verarbeitbaren Polyurethanpolymere können mit dem erfindungsgemäßen Verfahren diskontinuierlich oder kontinuierlich hergestellt werden. Die bekanntesten technischen Herstellverfahren dafür sind das Bandverfahren (GB-A 1 057018) und das Extruderverfahren (DE-A 1 964 834, DE-A2 059570 und US-A 5 795 948)

Zur Herstellung der thermoplastisch verarbeitbaren Polyurethanpolymere eignen sich die bekannten Mischaggregate, vorzugssweise die, die mit hoher Scherenergie arbeiten. Für die kontinuierliche Herstellung seien beispielhaft genannt Cokneter, vorzugsweise Extruder, wie z.B. Zweiwellenextruder und Busskneter.

Die thermoplastisch verarbeitbaren Polyurethanpolymere können z.B. auf einem Zweiwellenextruder dadurch hergestellt werden, dass man das Prepolymer im ersten Teil des Extruders herstellt und die Kettenverlängerung und Polyisocyanatzugabe im zweiten Teil anschließt. Erfindungsgemäß muss die Dosierung des Kettenverlängerers (Komponente (C)) vor der Dosierung des weiteren Polyisocyanates erfolgen. Die Zugabe des Kettenverlängerers und Polyisocyanates darf nicht parallel in die gleiche Dosieröffnung des Extruders erfolgen.

Das NCO- und OH-Prepolymer können aber auch außerhalb des Extruders in einem separaten, vorgeschalteten Prepolymerreaktor, diskontinuierlich in einem Kessel oder kontinuierlich in einem Rohr mit Statikmischern oder einem gerührten Rohr (Rohrmischer) hergestellt werden.

Ein in einem separaten Prepolymerreaktor hergestelltes OH-Prepolymer kann aber auch mittels eines ersten Mischapparates, z.B eines Statikmischers, mit dem Diisocyanat und mittels eines zweiten Mischapparates, z. B. eines Mischkopfes, mit dem Restmengen Polyisocyanaten vermischt werden. Anschließend wird dieses Reaktionsgemisch analog dem bekannten Bandverfahren kontinuierlich auf einen Träger, bevorzugt ein Förderband, aufgebracht, wo man es bis zur Erstarrung des Materials ggf. unter Beheizung des Bandes zum TPU reagieren lässt.

Ein weiterer Gegenstand der Erfindung ist ein thermoplastisch verarbeitbares Polyurethanpolymer erhältlich oder erhalten durch das erfindungsgemäße Verfahren. Die mit dem erfindungsgemäßen Verfahren hergestellten Polyurethanpolymere weisen bessere Eigenschaften auf, als solche die nach aus dem Stand der Technik bekannten Verfahren hergestellt wurden. Insbesondere härten die erfindungsgemäßen Polyurethanpolymere schneller aus und weisen eine höhere Shore-Härte, sowie eine verbesserte Zugfestigkeit auf.

Ein weiterer Gegenstand der Erfindung ist ein thermoplastisch verarbeitbares Polyurethanpolymer mit hoher Tieftemperaturschlagzähigkeit erhältlich oder erhalten durch Umsetzen der Komponenten
(A) einem oder mehreren im wesentlichen linearen Polyetherdiolen auf Basis eines Polymerisats von Tetrahydrofuran, wobei die Gesamtmenge der Komponente (A) ein mittleres Molekulargewicht von mindestens 1450 g/ mol aufweist, vorzugsweise ein mittleres Molekulargewicht im Bereich von 1450 g/mol bis 3500 g/mol aufweist, besonders bevorzugt ein mittleres Molekulargewicht im Bereich von 1450 g/mol bis 3000 g/mol aufweist, noch bevorzugter ein mittleres Molekulargewicht im Bereich von 1500 g/mol bis 3000 g/mol aufweist,
(B) einem oder mehreren organischen Polyisocyanaten, vorzugsweise organischen Diisocyanaten,
(C) einem oder mehreren linearen Diolen mit einem Molekulargewicht von 62 g/mol bis 500 g/mol,
(D) gegebenenfalls in Gegenwart von einem oder mehreren Katalysatoren,
(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern,
dadurch gekennzeichnet, dass die Umsetzung der Komponenten die folgenden Schritte umfasst oder daraus besteht:
1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
3) Umsetzen des OH-funktionellen Prepolymers mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt, vorzugsweise dass über alle Verfahrensschritte ein molares Verhältnis von Komponente (B) zu der Summe von Komponente (A) und Komponente (C) im Bereich von 0,95 : 1,0 bis 1,1 : 1,0 vorliegt.

In einer bevorzugten Ausführungsform des erfindungsgemäßen thermoplastisch verarbeitbaren Polyurethanpolymers mit hoher Tieftemperaturschlagzähigkeit, weist dieses eine Charpy-Schlagzähigkeit von mindestens 30 KJ/m², vorzugsweise von mindestens 70 KJ/m² auf, bestimmt gemäß DIN EN ISO179/1eA (2010) bei -30°C.

Ein weiterer Gegenstand der Erfindung ist eine Zusammensetzung enthaltend mindestens ein erfindungsgemäßes thermoplastisch verarbeitbares Polyurethanpolymer oder ein erfindungsgemäßes thermoplastisch verarbeitbares Polyurethanpolymer mit hoher Tieftemperaturschlagzähigkeit und ein Additiv.

Ein weiterer Gegenstand der Erfindung ist ein Artikel umfassend oder enthaltend ein erfindungsgemäßes thermoplastisch verarbeitbares Polyurethanpolymer oder ein erfindungsgemäßes thermoplastisch verarbeitbares Polyurethanpolymer mit hoher Tieftemperaturschlagzähigkeit oder eine erfindungsgemäße Zusammensetzung.

Ein weiterer Gegenstand der Erfindung ist die Verwendung eines erfindungsgemäßen thermoplastisch verarbeitbaren Polyurethanpolymers oder eines erfindungsgemäßen thermoplastisch verarbeitbaren Polyurethanpolymers mit hoher Tieftemperaturschlagzähigkeit oder einer erfindungsgemäßen Zusammensetzung zur Herstellung von Spritzgießartikeln, Extrusionsartikeln und Beschichtungen. Extrusionsartikel sind beispielsweise Filme, Folien oder Schläuche.

Die Erfindung soll anhand der nachfolgenden Beispiele näher erläutert werden.

### Messmethoden:

### Zugversuch:

Messungen im Zugversuch nach ISO 53504 (2009-10) mit einer Zuggeschwindigkeit von 200 mm/min.

### Shore Härte:

Die Messung der Shore Härte erfolgte nach DIN ISO 7619-1 (2012-02-01).

### Verfestigungsgeschwindigkeit (Härte bei 0s / 60s):

Zur Ermittlung der Verfestigungsgeschwindigkeit wurde die Härteentwicklung von runden Formkörpern (Durchmesser 30 mm, Höhe 6 mm) nach der Spritzgießverarbeitung (Einstellung der Spritzgießmaschine: 25 s Kühlzeit und 25 s Nachdruckzeit) gemessen. Dabei wurde die Härte der Prüfkörper nach DIN 7619-1 (2012-02-01) sofort nach der Entnahme aus der Form (0 s) und nach 60 s gemessen.

### Charpy Schlagzähigkeitsprüfung

Von den Spritzgießkörpern wurden die Charpy Schlagzähigkeitsprüfungen nach DIN EN ISO179/1eA (2010) bei -30°C durchgeführt. Der Probekörper hat folgende Dimensionen: 80±2mm Länge, 10,0±0,2mm Breite und 4,0±0,2mm Dicke. Der Probekörper ist gekerbt. Der Kerbgrundradius r_{N} beträgt 0,25±0,05mm.

### Verwendete Rohstoffe:

Polyol 1 = Desmophen® 2028 (Handelsprodukt von Covestro Deutschland AG, Polyester, Molekulargewicht ca. 2000g/mol)
Polyol 2 = Acclaim®2200N (Handelsprodukt von Covestro Deutschland AG, Polypropylendiolether, Molekulargewicht ca. 2000g/mol)
Polyol 3 = Terathane®1000 (Handelsprodukt von Invista: Polytetramethylenglykol; Molekulargewicht ca. 1000g/mol)
Polyol 4 = Terathane®2000 (Handelsprodukt von Invista: Polytetramethylenglykol; Molekulargewicht ca. 2000g/mol
Polyol 5 = Desmophen® C2202 (Handelsprodukt von Covestro Deutschland AG, Polycarbonatdiol, Molekulargewicht ca. 2000/mol)
Polyol 6=Terathane®1450 (Handelsprodukt von Invista: Polytetramethylglykol; Molekulargewicht ca. 1400g/mol)
Polyol 7= Terathane® 2900 (Handelsprodukt von Invista, Polytetramethylglykol, Molekulargewicht ca. 2900)
BDO = 1,4-Butandiol (BDO, Reinheit ≥ 99 Gew.-%) wurde von der Firma Ashland bezogen.
MEG = 1,2-Ethandiol (MEG, Reinheit ≥ 99 Gew.-%) wurde von der Firma OQEMA AG bezogen.
MDI = 4,4'-Diphenylmethandiisocyanat (MDI, Reinheit ≥ 99 Gew.-%) wurde von der Covestro AG bezogen.
HDI = 1,6-Hexamethylendiisocyanat (HDI, Reinheit ≥ 99 Gew.-%) wurde von der Covestro AG bezogen.

### Beispiele

In der Tabelle 1 wird die Erfindung anhand einiger Beispiele verdeutlicht. Die verwendeten Herstellverfahren sind nachstehend beschrieben.

### Verfahren 1*: Weichsegment-Vorverlängerung (gemäß der EP-A 1338614), nicht erfindungsgemäß

Stufe 1: Die Teilmenge 1 des MDI's wird bei ca.140°C mit 1mol Polyol oder Polyolgemisch unter Rühren zum Umsatz > 90 mol-%, bezogen auf das Polyol, gebracht.
Stufe 2: Dem gerührten Reaktionsgemisch wird die Teilmenge 2 des MDI und anschließend der Kettenverlängerer zugegeben, nach intensiver Durchmischung (ca. 20 s) wird das Reaktionsgemisch auf ein Blech gegossen und anschließend 30 Minuten bei 120°C getempert.

### Verfahren 2*: One-Shot Verfahren mit HDI als Diisocyanat, nicht erfindungsgemäß

Stufe 1: 1mol Polyol oder Polyolgemisch wird zusammen mit dem Kettenverlängerer vorgelegt und auf eine Reaktionstemperatur von ca. 120 °C aufgeheizt. Anschließend wird die gesamte Menge an HDI zugegeben. Nach intensiver Durchmischung (ca. 60 s) wird das Reaktionsgemisch auf ein Blech gegossen und anschließend 30 Minuten bei 80 °C getempert.

### Verfahren 3: Erfindungsgemäßes Mehrstufen-Vorverlängerungsverfahren MDI

Stufe 1: Die Teilmenge 1 des MDI's wird bei ca.140°C mit 1 mol Polyol oder Polyolgemisch unter Rühren zum Umsatz > 90 mol-%, bezogen auf das Polyol, gebracht.
Stufe 2: Dem gerührten Reaktionsgemisch wird der Kettenverlängerer zugegeben und ca. 10 s intensiv gerührt.
Stufe 3: Die Teilmenge 2 des MDI's wird der gerührten Reaktionsmischung zugegeben. Das Reaktionsgemisch wird weitere 20 s gerührt, anschließend auf ein Blech gegossen und 30 Minuten bei 120°C getempert.

### Verfahren 4: Erfindungsgemäßes Mehrstufen-Vorverlängerungsverfahren HDI

Stufe 1: Die Teilmenge 1 des HDI's wird bei ca.160°C mit 1 mol Polyol oder Polyolgemisch unter Rühren zum Umsatz > 90 mol-%, bezogen auf das Polyol, gebracht.
Stufe 2: Dem gerührten Reaktionsgemisch wird der Kettenverlängerer zugegeben und ca. 60 s intensiv gerührt.
Stufe 3: Die Teilmenge 2 des HDI's wird der gerührten Reaktionsmischung zugegeben. Das Reaktionsgemisch wird weitere 20 s gerührt, anschließend auf ein Blech gegossen und 30 Minuten bei 80°C getempert.

Die erhaltenen TPU-Gießplatten wurden geschnitten und granuliert. Das Granulat wurde mit einer Spritzgießmaschine vom Typ Arburg Allrounder 470S in einem Temperaturbereich von 180° bis 230°C und in einem Druckbereich von 650 bis 750 bar bei einem Einspritzstrom von 10 bis 35 cm³/s zu Stäben (Formtemperatur: 40°C; Stabgröße: 80x10x4mm) bzw. Platten (Formtemperatur: 40°C; Größe: 125x50x2 mm) verarbeitet.

Von den hergestellten TPU Produkten wurden die mechanischen Werte (100% Modul, 300%-Modul, Reißfestigkeit, Reißdehnung und Shore A/D Härte) und die Verfestigungsgeschwindigkeit ermittelt.

**Tabelle 1: Beispiele 1 - 16: Messergebnisse von weichen bis harten TPUs**

| Versuchsnummer | Verfah -ren | Poly -ol | Kettenverlängerer | MDI / HDI Teilmenge 1 [mol] | MDI / HDI Teilmenge 2 [mol] | Theoretische Härte^{#} | Härte [Shore] | 100% Modul [MPa] | Zugfestigkeit [MPa] | Härte bei 0s/60s [Shore A] |
|---|---|---|---|---|---|---|---|---|---|---|
| 1 | 1* | 1 | BDO | 1,25 | 1,011 | 16 | 65A | 2,3 | 36 | 27/39 |
| 2 | 3 | 1 | MEG | 1,5 | 0,875 | 16 | 64A | 2,2 | 31,6 | 45/52 |
| 3 | 1* | 2 | MEG | 1,5 | 0,539 | 12 | 42A | 2,4 | 15,3 | 19/25 |
| 4 | 3 | 2 | MEG | 1,5 | 0,539 | 12 | 47A | 1,5 | 15,1 | 26/33 |
| 5 | 3 | 2 | MEG | 1,5 | 1,642 | 22.4 | 60A | 4,3 | 14,4 | 39/43 |
| 6 | 1* | 2 | MEG | 1,3 | 0,739 | 12 | 40A | 1,1 | 9,8 | 11/18 |
| 7 | 3 | 2 | MEG | 1,3 | 0,739 | 12 | 49A | 1,9 | 11,8 | 30/34 |
| 8 | 3 | 2 | MEG | 2 | 0.373 | 16 | 55A | 2,1 | 12 | 35/48 |
| 9 | 3 | 2 | BDO | 2 | 0.255 | 16 | 59A | 1,6 | 14,9 | 20/45 |
| 10 | 1* | 3+4 | BDO | 1,5 | 3,66 | 47,4 | ** | ** | ** | ** |
| 11 | 3 | 3+4 | BDO | 1,5 | 3,66 | 47,4 | 52D | 22 | 30 | 78/88 |
| 12 | 1* | 3+4 | BDO | 4 | 21,829 | 78,4 | ** | ** | ** | ** |
| 13 | 3 | 3+4 | BDO | 4 | 21,829 | 78,4 | 73D | 49,4 | 58,3 | - |
| 14 | 1* | 5 | BDO | 4 | 14,029 | 72 | ** | ** | ** | ** |
| 15 | 3 | 5 | BDO | 4 | 14,029 | 72 | 81D | 50 | 69,1 | - |
| 16 | 2* | 5 | BDO | 3,1*** | - | 20,1 | 87A | 9,2 | 26,9 | 55/76 |
| 17 | 4 | 5 | BDO | 1,1 | 2,0 | 20,1 | 89A | 8,9 | 28,7 | 79/84 |
| 18 | 4 | 5 | BDO | 1,7 | 1,4 | 20,1 | 88A | 12 | 24,6 | 75/81 |

| | | | | | | | | | | |
|---|---|---|---|---|---|---|---|---|---|---|
| * Nicht erfindungsgemäßes Vergleichsbeispiel, ** Keine Verarbeitung möglich *** Gesamte HDI-Menge (One Shot Verfahren), ^{#} Die theoretische Härte ist der Anteil der Hartsegmente des TPUs: z. B. TH = n(BDO+MDI)/(n(BDO+MDI)+m(Polyol+MDI)) | | | | | | | | | | |

In den angeführten Beispielen der Tabelle 1 (Versuche 3, 4, 6, 7, 16, 17 und 18), bei denen gleiche Rohstoffe bei gleicher theoretischen Härte nach unterschiedlichen Verfahren hergestellt wurden, ist deutlich zu erkennen, dass die TPU-Materialien, die durch die erfindungsgemäße Mehrstufenverfahren (Verfahren 3 und 4) hergestellt wurden, deutlich schneller verfestigen, das heißt, die gemessene Härte nach 0 Sekunden und auch nach 60 Sekunden der Entnahme aus der Spritzgießmaschine ist höher als bei den jeweiligen Vergleichsversuchen. Bei den Versuchen 1, 2, 8 und 9 (sehr weiche, sowohl Polyester basierte TPU als auch Polyether basierte TPU) ist deutlich zu erkennen, dass die auf Monoethylenglykol (MEG) basierten TPU schneller in der Verfestigung sind als solche, die auf 1,4-Butandiol (BDO) basieren. Harte und sehr harte TPU Materialien, welche mit dem nicht erfindungsgemäßen Verfahren 1 nicht hergestellt werden können (Versuche 10 und 12), kann man mit dem erfindungsgemäßen Verfahren 3 (Versuche 11, 13 und 15) ohne Probleme herstellen.

**Tabelle 2: Beispiele 17 - 24: Verbesserung der Charpy Schlagzähigkeit mit Hilfe des erfindungsgemäßen Verfahrens**

| | Verfahren | Polyole | Mischungsverhältnis Polyole [Gew.-%] | Durchschnittliches Molgewicht des Polyols | Kettenverlängerer | MDI Teilmenge 1 [Mol] | MDI Teilmenge 2 [Mol] | Theoretische Härte^{#} | Charpy Schlagzähigkeitsprüfung (-30°C) [KJ/m²] |
|---|---|---|---|---|---|---|---|---|---|
| 19 | 1* | 4/3 | 50/50 | 1342 | BDO | 4 | 3.562 | 58.2 | 10s⁺⁾ |
| 20 | 3 | 4/3 | 50/50 | 1342 | BDO | 4 | 3.562 | 58.2 | 21,64s⁺⁾ |
| 21 | 3 | 6 | 100 | 1400 | BDO | 4 | 3.797 | 58.2 | 18,2s⁺⁾ |
| 22 | 3 | 4/3 | 70/30 | 1560 | BDO | 4 | 4.421 | 58.2 | 91,22z⁺⁾ |
| 23 | 1* | 4 | 100 | 2078 | BDO | 4 | 6,598 | 58,2 | ** |
| 24 | 3 | 4 | 100 | 2078 | BDO | 4 | 6.598 | 58.2 | 102,16z⁺⁾ |
| 25 | 1* | 7 | 100 | 2900 | BDO | 4 | 9.704 | 58,2 | ** |
| 26 | 3 | 7 | 100 | 2900 | BDO | 4 | 9.704 | 58.2 | 96,35z⁺⁾ |

| | | | | | | | | | |
|---|---|---|---|---|---|---|---|---|---|
| +) Bruchart: s = spröde und z = zäh * Nicht erfindungsgemäßes Vergleichsbeispiel ** Keine Verarbeitung möglich # Die theoretische Härte ist der Anteil der Hartsegmente des TPUs. TH = n(BDO+MDI)/(n(BDO+MDI)+m(Polyol+MDI)) | | | | | | | | | |

In den angegebenen Beispielen der Tabelle 2 ist deutlich zu erkennen, dass sich bei den TPU gemäß dem erfindungsgemäßen Verfahren 3 die Tieftemperaturschlagzähigkeit mit steigendem Molekulargewicht des Polyols verbessert. Das TPU Material ist bei -30°C nicht mehr spröde, wenn das durchschnittliche Molekulargewicht des Polyols höher als 1450 g/mol ist. Bei der Herstellung der jeweiligen TPU nach dem nicht erfindungsgemäßen Verfahren 1 bekommt man kein geeignetes TPU Material. Entweder ist die Tieftemperaturschlagzähigkeit schlecht (Versuch 19), bzw. schlechter als beim erfindungsgemäßen Verfahren (Versuch 20) oder die TPU lassen sich nicht verarbeiten (Versuche 23 und 25).

## Patentansprüche

1. Verfahren zur Herstellung von thermoplastisch verarbeitbaren Polyurethanpolymeren durch Umsetzen der Komponenten
(A) einem oder mehreren im wesentlichen linearen Polyolen, wobei die Gesamtmenge der Komponente (A) ein mittleres Molekulargewicht im Bereich von 500 g/mol bis 5000 g/mol aufweist,
(B) einem oder mehreren organischen Polyisocyanaten, vorzugsweise organischen Diisocyanaten,
(C) einem oder mehreren linearen Diolen mit einem Molekulargewicht von 62 g/mol bis 500 g/mol,
(D) gegebenenfalls in Gegenwart von einem oder mehreren Katalysatoren,
(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern,
**dadurch gekennzeichnet, dass** das Verfahren die folgenden Schritte umfasst oder daraus besteht:
1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
3) Umsetzen des OH-funktionellen Prepolymers mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt.

2. Verfahren nach Anspruch 1, **dadurch gekennzeichnet, dass** im Verfahrensschritt 2) ein molares Verhältnis von NCO-funktionellen Prepolymer zu Komponente (C) von kleiner 1,0 vorliegt.

3. Verfahren nach Anspruch 1 oder 2, **dadurch gekennzeichnet, dass** als Komponente (A) ein oder mehrere Polyole eingesetzt werden ausgewählt aus der Gruppe bestehend aus Polyesterdiolen, Polyetherdiolen, Polycarbonatdiolen oder einem Gemisch aus mindestens zwei von diesen, vorzugsweise wobei die ein oder mehreren Polyole jeweils ein mittleres Molekulargewicht im Bereich von 500 g/mol bis 5000 g/mol aufweisen.

4. Verfahren nach einem der Ansprüche 1 oder 2, **dadurch gekennzeichnet, dass** als Komponente (A) ein oder mehrere Polyesterdiole mit einem mittleren Molekulargewicht im Bereich von 500 g/mol bis 5000 g/mol, vorzugsweise im Bereich von 600 g/mol bis 3500 g/mol und besonders bevorzugt im Bereich von 800 g/mol bis 3000 g/mol, eingesetzt werden.

5. Verfahren nach einem der Ansprüche 1 oder 2, **dadurch gekennzeichnet, dass** als Komponente (A) ein oder mehrere Polycarbonatdiole mit einem mittleren Molekulargewicht im Bereich von im Bereich von 500 g/mol bis 5000 g/mol, vorzugsweise im Bereich von 750 g/mol bis 5000 g/mol und besonders bevorzugt im Bereich von 1000 g/mol bis 4500 g/mol, eingesetzt werden.

6. Verfahren nach einem der Ansprüche 1 oder 2, **dadurch gekennzeichnet, dass** als Komponente (A) ein oder mehrere Polyetherdiole mit einem mittleren Molekulargewicht im Bereich von 500 g/mol bis 5000 g/mol, vorzugsweise im Bereich von 750 g/mol bis 5000 g/mol und besonders bevorzugt im Bereich von 900 g/mol bis 4200 g/mol, eingesetzt werden.

7. Verfahren nach Anspruch 6, **dadurch gekennzeichnet, dass** das eine oder die mehreren Polyetherdiole unabhängig voneinander Polyether auf Basis eines Polymerisats von Ethylenoxid oder Propylenoxyd oder einem Gemisch aus verschiedenen Polymerisaten dieser Rohstoffe ist.

8. Verfahren nach Anspruch 6, **dadurch gekennzeichnet, dass** das eine oder die mehreren Polyetherdiole unabhängig voneinander Polyether auf Basis eines Polymerisats von Tetrahydrofuran ist.

9. Verfahren nach einem der Ansprüche 1 bis 8, **dadurch gekennzeichnet, dass** als Komponente (B) ein Diphenylmethandiisocyanat-Isomerengemisch mit einem 4,4'-Diphenylmethandiisocyanatgehalt von größer 96 Gew.-% bezogen auf das Gesamtgewicht der Komponente (B) eingesetzt wird, vorzugsweise wobei als Komponente (B) 4,4'-Diphenylmethandiisocyanat eingesetzt wird.

10. Verfahren nach einem der Ansprüche 1 bis 8, **dadurch gekennzeichnet, dass** als Komponente (B) 1,6-Hexamethylendiisocyanat eingesetzt wird.

11. Verfahren nach einem der Ansprüche 1-10, **dadurch gekennzeichnet, dass** als Komponente (C) ein oder mehrere Diole eingesetzt werden, ausgewählt aus der Gruppe bestehend aus 1,2-Ethandiol, 1,4-Butandiol, 1,6-Hexandiol, 1,4-Di-(beta-Hydroxyethyl)hydrochinon oder einen Gemisch aus mindestens zwei von diesen, vorzugsweise wobei 1,2-Ethandiol, 1,4-Butandiol oder Mischungen hieraus und besonders bevorzugt wird als Komponente (C) 1,2-Ethandiol eingesetzt.

12. Verfahren nach einem der Ansprüche 1-11, **dadurch gekennzeichnet, dass** thermoplastisch verarbeitbares Polyurethanpolymer eine Härte von kleiner 60 Shore A oder größer 80 Shore D, vorzugsweise im Bereich von 35 Shore A bis 60 Shore A oder im Bereich von 70 Shore D bis 95 Shore D, besonders bevorzugt im Bereich von 40 Shore A bis 55 Shore A oder im Bereich von 75 Shore D bis 90 Shore D aufweist.

13. Thermoplastisch verarbeitbares Polyurethanpolymer erhältlich oder erhalten durch ein Verfahren nach einem der Ansprüche 1 bis 12.

14. Thermoplastisch verarbeitbares Polyurethanpolymer mit hoher Tieftemperaturschlagzähigkeit erhältlich oder erhalten durch Umsetzen der Komponenten
(A) einem oder mehreren im wesentlichen linearen Polyetherdiolen auf Basis eines Polymerisats von Tetrahydrofuran, wobei die Gesamtmenge der Komponente (A) ein mittleres Molekulargewicht von mindestens 1450g/ mol aufweist, vorzugsweise ein mittleres Molekulargewicht im Bereich von 1450 g/mol bis 3500 g/mol aufweist, besonders bevorzugt ein mittleres Molekulargewicht im Bereich von 1450 g/mol bis 3000 g/mol aufweist, noch bevorzugter ein mittleres Molekulargewicht im Bereich von 1500 g/mol bis 3000 g/mol aufweist,
(B) einem oder mehreren organischen Polyisocyanaten, vorzugsweise organischen Diisocyanaten,
(C) einem oder mehreren linearen Diolen mit einem Molekulargewicht von 62 g/mol bis 500 g/mol,
(D) gegebenenfalls in Gegenwart von einem oder mehreren Katalysatoren,
(E) gegebenenfalls in Gegenwart von einem oder mehreren Additiven, Hilfs- und / oder Zusatzstoffen, und
(F) gegebenenfalls in Gegenwart von einem oder mehreren monofunktionellen Kettenabbrechern,
**dadurch gekennzeichnet, dass** die Umsetzung der Komponenten die folgenden Schritte umfasst oder daraus besteht:
1) Bereitstellen und Umsetzen einer Mischung aus der Gesamtmenge der Komponente (A), einer Teilmenge der Komponente (B) und gegebenenfalls einer Teilmenge oder der Gesamtmenge der Komponente (D), Komponente (E) und /oder Komponente (F) zu einem NCO-funktionellen Prepolymer, wobei in Verfahrensschritt 1) ein molares Verhältnis von Komponente (B) zu Komponente (A) im Bereich von 1,1 : 1,0 bis 5,0 : 1,0 vorliegt,
2) Umsetzen des NCO-funktionellen Prepolymers aus Verfahrensschritt 1) mit der Gesamtmenge an Komponente (C) unter Erhalt eines OH-funktionellen Prepolymers, gegebenenfalls in Gegenwart einer weiteren Teilmenge der Komponente (D), Komponente (E) und /oder Komponente (F),
3) Umsetzen des OH-funktionellen Prepolymers mit der Restmenge der Komponente (B) und gegebenenfalls der Restmenge der Komponente (D), Komponente (E) und /oder Komponente (F) unter Erhalt des thermoplastisch verarbeitbaren Polyurethans, wobei über alle Verfahrensschritte ein molares Verhältnis von Komponente (B) zu der Summe von Komponente (A) und Komponente (C) im Bereich von 0,9 : 1,0 bis 1,2 : 1,0 vorliegt, vorzugsweise dass über alle Verfahrensschritte ein molares Verhältnis von Komponente (B) zu der Summe von Komponente (A) und Komponente (C) im Bereich von 0,95 : 1,0 bis 1,1 : 1,0 vorliegt.

15. Thermoplastisch verarbeitbares Polyurethanpolymer mit hoher Tieftemperaturschlagzähigkeit nach Anspruch 14, **dadurch gekennzeichnet, dass** das thermoplastisch verarbeitbare Polyurethanpolymer eine Charpy-Schlagzähigkeit von mindestens 30 KJ/m², vorzugsweise von mindestens 70 KJ/m² aufweist, bestimmt gemäß DIN EN ISO179/1eA (2010) bei -30°C.

16. Zusammensetzung enthaltend mindestens ein thermoplastisch verarbeitbares Polyurethanpolymer nach Anspruch 13 oder ein thermoplastisch verarbeitbares Polyurethanpolymer mit hoher Tieftemperaturschlagzähigkeit nach Anspruch 14 oder 15 und ein Additiv.

17. Artikel umfassend oder enthaltend ein thermoplastisch verarbeitbares Polyurethanpolymer nach Anspruch 13 oder ein thermoplastisch verarbeitbares Polyurethanpolymer mit hoher Tieftemperaturschlagzähigkeit nach Anspruch 14 oder 15 oder eine Zusammensetzung nach Anspruch 16.

18. Verwendung eines thermoplastisch verarbeitbaren Polyurethanpolymers nach Anspruch 13 oder eines thermoplastisch verarbeitbaren Polyurethanpolymers mit hoher Tieftemperaturschlagzähigkeit nach Anspruch 14 oder 15 oder einer Zusammensetzung nach Anspruch 16 zur Herstellung von Spritzgießartikeln, Extrusionsartikeln und Beschichtungen.
